(19) Europäisches Patentamt / European Patent Office / Office européen des brevets

(11) **EP 2 715 760 B1**

(12) **FASCICULE DE BREVET EUROPEEN**

(45) Date de publication et mention de la délivrance du brevet:
**16.05.2018 Bulletin 2018/20**

(21) Numéro de dépôt: **12725686.5**

(22) Date de dépôt: **24.05.2012**

(51) Int Cl.:
***H01H 33/22*** *(2006.01)*    ***H02B 13/055*** *(2006.01)*

(86) Numéro de dépôt international:
**PCT/EP2012/059750**

(87) Numéro de publication internationale:
**WO 2012/160158 (29.11.2012 Gazette 2012/48)**

(54) **MELANGE DE DECAFLUORO-2-METHYLBUTAN-3-ONE ET D'UN GAZ VECTEUR COMME MILIEU D'ISOLATION ELECTRIQUE ET/OU D'EXTINCTION DES ARCS ELECTRIQUES EN MOYENNE TENSION**

MISCHUNG AUS DECAFLUORO-2-METHYLBUTAN-3-ONE UND EINEM TRÄGERGAS ALS ELEKTRISCHES ISOLATIONSMEDIUM UND/ODER ALS LICHTBOGENLÖSCHMEDIUM IN HOCHSPANNUNG

MIXTURE OF DECAFLUORO-2-METHYLBUTAN-3-ONE AND A CARRIER-GAS AS AN ELECTRICAL INSULATION MEDIUM AND/OR ELECTRICAL ARC EXTINCTION MEDIUM IN HIGH TENSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2011 FR 1154517**

(43) Date de publication de la demande:
**09.04.2014 Bulletin 2014/15**

(73) Titulaire: **Schneider Electric Industries SAS**
**92500 Rueil-Malmaison (FR)**

(72) Inventeurs:
• **KIEFFEL, Yannick**
  **F-38440 Saint-Jean-de-Bournay (FR)**

• **GIRODET, Alain**
  **F-69680 Chassieu (FR)**
• **PICCOZ, Daniel**
  **F-69480 Lucenay (FR)**

(74) Mandataire: **Ahner, Philippe et al**
**BREVALEX**
**95, rue d'Amsterdam**
**75378 Paris Cedex 8 (FR)**

(56) Documents cités:
**DE-U1-202009 009 305**

**Description**

## DOMAINE TECHNIQUE

La présente invention se rapporte au domaine de l'isolation électrique et de l'extinction des arcs électriques dans des appareils électriques moyenne ou haute tension.

Plus précisément, elle se rapporte à l'utilisation d'un mélange comprenant une fluorocétone particulière, à savoir la décafluoro-2-méthylbutan-3-one, et un gaz vecteur tel que l'air, l'azote ou le dioxyde de carbone, comme milieu d'isolation électrique et/ou d'extinction des arcs électriques dans un appareil électrique moyenne ou haute tension.

Elle se rapporte également à un appareil électrique moyenne ou haute tension dans lequel l'isolation électrique et/ou l'extinction des arcs électriques est (sont) assurée(s) par un mélange comprenant de la décafluoro-2-méthylbutan-3-one et un gaz vecteur.

Cet appareil électrique peut notamment être un transformateur électrique tel qu'un transformateur d'alimentation ou de mesure, une ligne à isolation gazeuse (ou LIG) pour le transport ou la distribution de l'électricité, un jeu de barres ou encore un appareil électrique de connexion/déconnexion (aussi appelé appareil de coupure) tel qu'un disjoncteur, un interrupteur, un combiné interrupteur-fusibles, un sectionneur, un sectionneur de mise à la terre ou un contacteur.

## ÉTAT DE LA TECHNIQUE ANTÉRIEURE

Dans les appareils électriques moyenne ou haute tension, l'isolation électrique et, le cas échéant, l'extinction des arcs électriques sont typiquement assurées par un gaz qui est confiné à l'intérieur de ces appareils.

Dans ce qui précède et ce qui suit, les termes « moyenne tension » et « haute tension » sont utilisés dans leur acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu, tandis que le terme « haute tension » désigne une tension qui est strictement supérieure à 52 000 volts en courant alternatif et à 75 000 volts en courant continu.

Actuellement, le gaz le plus souvent utilisé dans ce type d'appareil est l'hexafluorure de soufre ($SF_6$). Ce gaz présente, en effet, une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son prix est, encore aujourd'hui, modéré.

Toutefois, le $SF_6$ a pour inconvénient majeur de présenter un potentiel de réchauffement global (PRG) de 22 800 (relativement au $CO_2$ sur 100 ans) et une durée de séjour dans l'atmosphère de 3 200 ans, ce qui le place parmi les gaz à fort pouvoir d'effet de serre.

Le $SF_6$ a donc été inscrit par le Protocole de Kyoto (1997) sur la liste des gaz dont les émissions doivent être limitées.

Le meilleur moyen de limiter les émissions du $SF_6$ consiste à limiter l'utilisation de ce gaz, ce qui a conduit les industriels à chercher des alternatives au $SF_6$.

Les gaz dits simples comme l'air ou l'azote, qui n'ont pas d'impact négatif sur l'environnement, présentent une rigidité diélectrique beaucoup plus faible que celle du $SF_6$. Ainsi, par exemple, les rigidités diélectriques en tension alternative (50 Hz) de l'air et de l'azote sont sensiblement trois fois plus faibles que celle du $SF_6$.

De ce fait, l'utilisation de ces gaz simples pour l'isolation électrique et/ou l'extinction des arcs électriques dans des appareils électriques moyenne ou haute tension implique d'augmenter de façon drastique le volume et/ou la pression de remplissage de ces appareils, ce qui va à l'encontre des efforts qui ont été réalisés au cours de ces dernières décennies pour développer des appareils électriques compacts, à encombrement de plus en plus réduit.

Des mélanges de $SF_6$ et d'azote sont utilisés pour limiter l'impact du $SF_6$ sur l'environnement. En effet, l'ajout de $SF_6$ à hauteur de 10 à 20% volumiques permet d'améliorer significativement la rigidité diélectrique de l'azote.

Néanmoins, du fait du fort PRG du $SF_6$, le PRG de ces mélanges reste très élevé. Ainsi, par exemple, un mélange de $SF_6$ et d'azote dans un rapport volumique de 10/90 présente une rigidité diélectrique en tension alternative (50 Hz) égale à 59% de celle du $SF_6$ mais son PRG est de l'ordre de 8000 à 8650.

De tels mélanges ne sauraient donc être utilisés comme gaz à faible impact environnemental.

Il en est de même des perfluorocarbones qui présentent, d'une manière générale, des propriétés de tenue diélectrique intéressantes mais dont les PRG s'inscrivent typiquement dans une gamme allant de 5 000 à 10 000 (6 500 pour $CF_4$, 7 000 pour $C_3F_8$ et $C_4F_{10}$, 8 700 pour $c$-$C_4F_8$, 9 200 pour $C_2F_6$).

Récemment, il a été proposé de remplacer le $SF_6$ par le trifluoroiodométhane ($CF_3I$) (Nakauchi et al., XVI International Conference on Gas Discharge and their Applications, Chine, 11-15 septembre 2006, **[1]**). En effet, le $CF_3I$ présente une rigidité diélectrique supérieure à celle du $SF_6$ et ce, aussi bien en champ homogène qu'en champ hétérogène, pour un PRG inférieur à 5 et une durée de séjour dans l'atmosphère de 0,005 année.

Malheureusement, outre que le $CF_3I$ est cher, il possède une valeur moyenne d'exposition (VME) de l'ordre de 3 à 4 ppm et est classé parmi les substances cancérigènes, mutagènes et reprotoxiques (CMR) de catégorie 3, ce qui est rédhibitoire pour une utilisation à une échelle industrielle.

Il a également été proposé d'utiliser des systèmes hybrides d'isolation associant une isolation gazeuse, par exemple par de l'air sec, de l'azote ou du $CO_2$, à une isolation solide. Comme décrit dans la demande de brevet européen publiée sous le n° 1 724 802, **[2],** cette isolation solide consiste, par exemple, à recouvrir les pièces sous tension qui présentent un fort gradient électrique par une résine du type résine époxyde ou analogue, ce qui permet de réduire le champ auquel sont soumises les pièces sous tension.

Cependant, l'isolation ainsi obtenue n'est pas équivalente à celle fournie par le $SF_6$ et l'utilisation de ces systèmes hybrides nécessite d'augmenter le volume des appareils électriques par rapport à celui qu'autorise une isolation au $SF_6$.

Concernant la coupure des arcs électriques sans $SF_6$, différentes solutions existent, à savoir la coupure dans l'huile, la coupure dans l'air ambiant et la coupure avec ampoule à vide.

Toutefois, les appareils à coupure dans l'huile présentent l'inconvénient majeur d'exploser en cas de non coupure ou de défaut interne. Les appareils à coupure dans l'air ambiant sont généralement de grandes dimensions, coûteux et sensibles à l'environnement (humidité, pollution), tandis que les appareils, notamment les interrupteurs sectionneurs, à coupure avec ampoule à vide sont très onéreux et très peu présents sur le marché.

Enfin, il a été proposé dans le modèle d'utilité DE 20 2009 009 305 U1, **[3],** d'utiliser une fluorocétone telle que la décafluoro-2-méthylbutan-3-one, seule ou en mélange avec un autre composant, comme milieu de remplissage d'un commutateur de moyenne ou haute tension pour y assurer une isolation électrique et une extinction des arcs électriques. Toutefois, ce document est muet sur les performances susceptibles d'être réellement obtenues, en termes d'isolation électrique et d'extinction des arcs électriques, avec ce type de milieu de remplissage.

Il n'existe donc pas à ce jour d'alternative au $SF_6$ qui soit véritablement satisfaisante.

Aussi, les Inventeurs se sont-ils fixé pour but de trouver un gaz qui, tout en ayant de bonnes propriétés d'isolation électrique et d'extinction des arcs électriques, ait un impact sur l'environnement faible ou nul et ne soit, par ailleurs, pas toxique pour l'homme et les animaux.

Ils se sont de plus fixé pour but que l'utilisation de ce gaz dans les appareils électriques moyenne ou haute tension qui sont actuellement commercialisés, en lieu et place du $SF_6$ dont sont généralement remplis ces appareils, conduise à des performances, en termes d'isolation électrique et/ou d'extinction des arcs électriques, équivalentes à celles que procure le $SF_6$ et ce, sur toute la gamme des températures d'utilisation de ces appareils, ou ne nécessite, pour obtenir de telles performances, que d'apporter des modifications structurelles mineures auxdits appareils.

## EXPOSÉ DE L'INVENTION

Ces buts et d'autres encore sont atteints par l'invention qui propose, en premier lieu, l'utilisation d'un mélange comprenant une fluorocétone et un gaz vecteur comme milieu d'isolation électrique et/ou d'extinction des arcs électriques dans un appareil électrique moyenne ou haute tension, laquelle utilisation est caractérisée en ce que la fluorocétone est la décafluoro-2-méthylbutan-3-one et est présente dans le mélange en un pourcentage molaire qui est au moins égal à 95% du pourcentage molaire M déterminé par la formule (I) ci-après :

$$M = (P_{C5K}/P_{mélange}) \times 100 \quad (I)$$

dans laquelle :

- $P_{mélange}$ représente la pression, exprimée en kilopascals, du mélange à 20°C dans l'appareil électrique ; et
- $P_{C5K}$ représente la pression, exprimée en kilopascals, qui équivaut à 20°C à la pression de vapeur saturante que présente la décafluoro-2-méthyl-butan-3-one à la température minimale d'utilisation de l'appareil électrique, $P_{C5K}$ étant déterminée par la formule (II) ci-après :

$$P_{C5K} = (PVS_{C5K} \times 293)/T_{minimale} \quad (II)$$

dans laquelle :

* $PVS_{C5K}$ représente la pression de vapeur saturante, exprimée en kilopascals, que présente la décafluoro-2-méthylbutan-3-one à la température minimale d'utilisation de l'appareil électrique ; et

* T$_{minimale}$ représente la température minimale d'utilisation de l'appareil électrique, exprimée en Kelvins.

Ainsi, selon l'invention, on utilise, comme milieu d'isolation électrique et/ou d'extinction des arcs électriques, un mélange comprenant de la décafluoro-2-méthylbutan-3-one et un gaz vecteur (qui sera également appelé « gaz de dilution » dans ce qui suit puisque ce gaz a essentiellement pour fonction de diluer cette fluorocétone).

La décafluoro-2-méthylbutan-3-one répond à la formule brute $C_5F_{10}O$ et à la formule semi-développée $CF_3$-CO-$CF$-$(CF_3)_2$. Elle sera appelée plus simplement C5K dans ce qui suit.

Qui plus est, selon l'invention, C5K est présente dans le mélange utilisé en un pourcentage molaire qui est au moins égal à 95% du pourcentage molaire M (c'est-à-dire au moins égal à 0,95 fois ce pourcentage) de C5K permettant de garantir qu'à la température minimale d'utilisation de l'appareil, la proportion de C5K dans la partie de ce mélange qui se trouve à l'état gazeux est maximale, étant entendu que le mélange peut être en tout ou partie à l'état gazeux.

Une telle proportion maximale de C5K offre à la température minimale d'utilisation de l'appareil électrique, c'est-à-dire dans les conditions d'utilisation de cet appareil les plus défavorables, des propriétés d'isolation électrique et/ou d'extinction des arcs électriques optimales, se rapprochant ainsi de celles du $SF_6$.

Le tableau I ci-après indique les pressions de vapeur saturante, notées PVS$_{C5K}$, que présente C5K aux températures de 0, -5, -10, -15, -20, -25, - 30, -35 et -40°C, qui correspondent aux températures minimales d'utilisation typiquement prévues pour des appareils électriques moyenne ou haute tension.

Il indique également les pressions, notées P$_{C5K}$, qui correspondent à 20°C à ces pressions de vapeur saturante et qui sont obtenues en appliquant la formule (II) ci-avant.

Tableau I

| Températures | PVS$_{C5K}$ | P$_{C5K}$ |
|---|---|---|
| 0°C (273,15K) | 41,3 kPa | 44,3 kPa |
| -5°C (268,15K) | 33,6 kPa | 36,7 kPa |
| -10°C (263,15K) | 27,1 kPa | 30,2 kPa |
| -15°C (258,15K) | 21,7 kPa | 24,7 kPa |
| -20°C (253,15K) | 17,3 kPa | 20,0 kPa |
| -25°C (248,15K) | 13,6 kPa | 16,0 kPa |
| -30°C (243,15K) | 10,6 kPa | 12,7 kPa |
| -35°C (238,15K) | 8,1 kPa | 10,0 kPa |
| -40°C (233,15K) | 6,2 kPa | 7,8 kPa |

Dans le cas où l'appareil électrique est un appareil moyenne tension, le fait que C5K puisse être présente dans cet appareil partiellement à l'état gazeux et partiellement à l'état liquide n'est pas de nature à poser de problème normatif. Il est donc possible d'utiliser dans ce cas un mélange dans lequel C5K est présente en un pourcentage molaire supérieur au pourcentage molaire M.

Aussi, dans un appareil électrique moyenne tension, C5K est-elle, de préférence, présente dans le mélange en un pourcentage molaire compris entre 95% et 130% et, mieux encore, entre 95% et 110%, idéalement entre 99% et 110% du pourcentage molaire M. Autrement dit, C5K est préférentiellement présente dans le mélange en un pourcentage molaire qui est compris entre 0,95 fois et 1,3 fois et, mieux encore, entre 0,95 fois et 1,1 fois, idéalement entre 0,99 fois et 1,1 fois le pourcentage molaire M.

Par contre, dans le cas où l'appareil électrique est un appareil électrique haute tension du type poste sous enveloppe métallique (PSEM), il est souhaitable, pour qu'il puisse répondre aux normes CEI actuellement en vigueur, que C5K soit présente dans cet appareil exclusivement ou quasi exclusivement à l'état gazeux et ce, dans toute la gamme des températures d'utilisation de cet appareil.

Aussi, préfère-t-on que, dans un appareil électrique haute tension du type PSEM, C5K soit présente dans le mélange en un pourcentage molaire qui ne dépasse pas 100% du pourcentage molaire M (c'est-à-dire ce pourcentage molaire) afin de ne pas présenter de phase de liquéfaction. Le pourcentage de C5K est alors compris entre 95% et 100% du pourcentage molaire M (c'est-à-dire entre 0,95 fois ce pourcentage molaire et ce pourcentage molaire).

Conformément à l'invention, le gaz de dilution est, de préférence, choisi parmi les gaz qui présentent, d'une part, une température d'ébullition très basse, c'est-à-dire typiquement égale ou inférieure à -50°C à la pression standard, et, d'autre part, une rigidité diélectrique qui est au moins égale à celle que présente le dioxyde de carbone dans des conditions d'essai strictement identiques (même appareillage, même configuration géométrique, mêmes paramètres opératoires, ...) à celles utilisées pour mesurer la rigidité diélectrique dudit gaz.

De plus, on préfère que le gaz de dilution ne soit pas toxique, c'est-à-dire qu'il ne soit pas classé parmi les substances considérées comme cancérigènes, mutagènes et/ou toxiques pour la reproduction par le Règlement (CE) n° 1272/2008 du Parlement Européen et du Conseil du 16 décembre 2008, et qu'il présente, par ailleurs, un PRG faible, c'est-à-dire typiquement au plus égal à 500.

Des gaz qui présentent l'ensemble de ces propriétés sont, par exemple, l'air, de préférence sec (PRG de 0), l'azote (PRG de 0), le protoxyde d'azote (PRG de 310), le dioxyde de carbone (PRG de 1), les mélanges de dioxyde de carbone et d'oxygène dans un rapport volumique allant de 90/10 à 97/3, et des mélanges de ces différents gaz.

De préférence, le gaz de dilution est de l'air, de préférence sec, du dioxyde de carbone ou un mélange de ceux-ci.

L'invention a également pour objet un appareil électrique moyenne ou haute tension, qui comprend une enceinte étanche dans laquelle se trouvent des composants électriques ainsi qu'un mélange comprenant une fluorocétone et un gaz vecteur pour l'isolation électrique et/ou l'extinction des arcs électriques susceptibles de se produire dans cet appareil, caractérisé en ce que la fluorocétone est la décafluoro-2-méthylbutan-3-one et est présente dans le mélange en un pourcentage molaire au moins égal à 95% du pourcentage molaire M déterminé par la formule (I) ci-après :

$$M = (P_{C5K}/P_{mélange}) \times 100 \quad (I)$$

dans laquelle :

- $P_{mélange}$ représente la pression, exprimée en kilopascals, du mélange à 20°C dans l'appareil électrique ; et
- $P_{C5K}$ représente la pression, exprimée en kilopascals, qui équivaut à 20°C à la pression de vapeur saturante que présente la décafluoro-2-méthylbutan-3-one à la température minimale d'utilisation de l'appareil électrique, $P_{C5K}$ étant déterminée par la formule (II) ci-après :

$$P_{C5K} = (PVS_{C5K} \times 293)/T_{minimale} \quad (II)$$

dans laquelle :

* $PVS_{C5K}$ représente la pression de vapeur saturante de la décafluoro-2-méthylbutan-3-one à la température minimale d'utilisation de l'appareil électrique, exprimée en kilopascals ; et
* $T_{minimale}$ représente la température minimale d'utilisation de l'appareil électrique, exprimée en Kelvins.

Les caractéristiques du mélange comprenant C5K et le gaz vecteur qui est présent dans cet appareil sont telles que précédemment décrites à propos de l'utilisation de ce mélange.

Conformément à l'invention, cet appareil électrique peut être, en premier lieu, un transformateur électrique à isolation gazeuse comme, par exemple, un transformateur d'alimentation ou un transformateur de mesure.

Il peut également être une ligne à isolation gazeuse, aérienne ou souterraine, ou un jeu de barres pour le transport ou la distribution de l'électricité.

Enfin, il peut aussi être un appareil électrique de connexion/déconnexion (aussi appelé appareil de coupure) comme, par exemple, un disjoncteur, un interrupteur, un sectionneur, un combiné interrupteur-fusibles, un sectionneur de mise à la terre ou un contacteur.

D'autres caractéristiques et avantages de l'invention ressortiront du complément de description qui suit.

Il va de soi, toutefois, que ce complément de description n'est donné qu'à titre d'illustration de l'objet de l'invention et ne constitue en aucune manière une limitation de cet objet.

## BRÈVE DESCRIPTION DES DESSINS

La figure 1 illustre, sous la forme d'une courbe, l'évolution de la rigidité diélectrique normalisée d'un mélange de C5K et de $CO_2$ en fonction du pourcentage molaire de C5K que présente ce mélange.

La figure 2 illustre, sous la forme d'une courbe, l'évolution de la rigidité diélectrique normalisée d'un mélange de C5K et d'air sec en fonction du pourcentage molaire de C5K que présente ce mélange.

La figure 3 illustre, sous la forme d'un diagramme en barres, l'évolution de la tenue diélectrique en champ homogène obtenue pour un mélange de C5K et d'air sec en fonction du pourcentage molaire de C5K que présente ce mélange ;

sur ce diagramme, la tenue diélectrique du mélange C5K/air sec est exprimée sous la forme d'un pourcentage de la tenue diélectrique obtenue dans les mêmes conditions de température et de pression avec du $SF_6$, tandis que le pourcentage molaire de C5K est exprimé en pourcentage du pourcentage molaire M tel que précédemment défini.

## EXPOSÉ DÉTAILLÉ DE MODES DE RÉALISATION PARTICULIERS

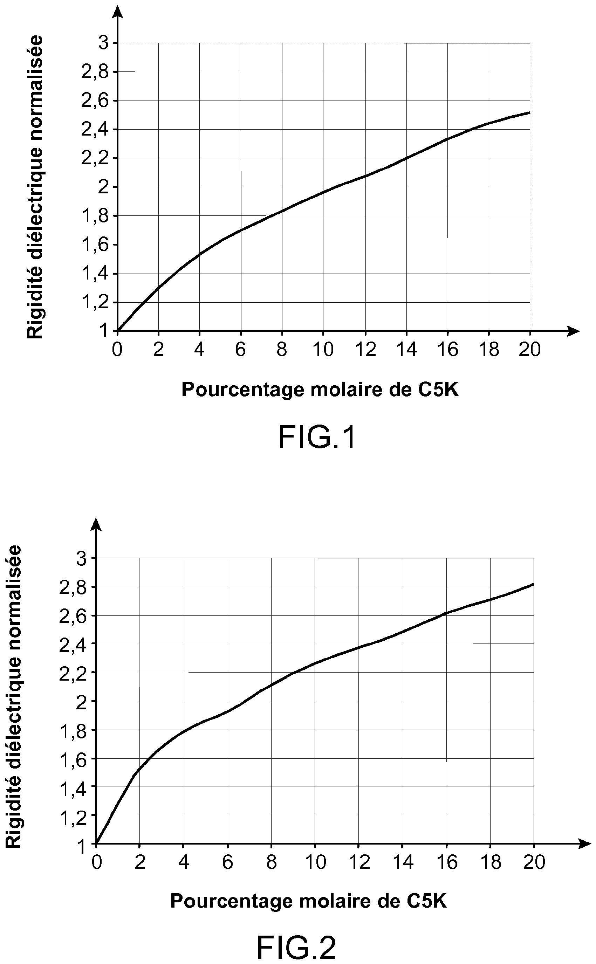

On se réfère tout d'abord aux figures 1 et 2 qui illustrent, sous la forme de courbes, l'évolution de la rigidité diélectrique normalisée de mélanges composés respectivement de C5K et de $CO_2$ (figure 1), et de C5K et d'air sec (figure 2) en fonction du pourcentage molaire de C5K que présentent ces mélanges.

Dans ce qui précède et ce qui suit, on entend par « rigidité diélectrique normalisée » d'un mélange composé de C5K et d'un gaz vecteur ou gaz de dilution, la rigidité diélectrique que présente ce mélange rapportée à celle que présente le gaz vecteur ou gaz de dilution lorsque ce gaz est utilisé seul dans les mêmes conditions.

L'évolution de la rigidité diélectrique normalisée qui est illustrée sur les figures 1 et 2 traduit donc le gain, en termes de rigidité diélectrique, qui est directement lié à l'augmentation du pourcentage molaire de C5K que présentent les mélanges C5K/$CO_2$ (figure 1) et C5K/air sec (figure 2).

Il est à noter que les valeurs de rigidité diélectrique indiquées sur les figures 1 et 2 sont données pour une configuration de champ électrique homogène.

En combinant les données du tableau I ci-avant et les données des figures 1 et 2, on peut donc prévoir que, pour un appareil électrique dont la température minimale d'utilisation sera de -30°C, l'utilisation de mélanges C5K/$CO_2$ et C5K/air sec présentant une pression égale à 100, 200, 300, 400 ou 500 kPa à 20°C et une pression partielle de C5K de 12,7 kPa à 20°C (c'est-à-dire correspondant la valeur de $P_{C5K}$ indiquée dans le tableau I ci-avant pour une température de -30°C), conduira aux valeurs de rigidité diélectrique normalisée indiquées dans le tableau II ci-après.

Tableau II

| Pression du mélange à 20°C | Pression partielle de C5K à 20°C | Pourcentage molaire de C5K dans le mélange | Rigidité diélectrique normalisée | |
|---|---|---|---|---|
| | | | Mélange C5K/$CO_2$ | Mélange C5K/air sec |
| 100 kPa | | 12,7% | 2,1 | 2,4 |
| 200 kPa | | 6,4% | 1,7 | 2,0 |
| 300 kPa | 12,7 kPa | 4,2% | 1,5 | 1,8 |
| 400 kPa | | 3,2% | 1,4 | 1,6 |
| 500 kPa | | 2,5% | 1,3 | 1,5 |

De la même manière, on peut prévoir que, pour un appareil électrique dont la température minimale d'utilisation sera de -15°C, l'utilisation de mélanges C5K/$CO_2$ et C5K/air sec présentant une pression égale à 100, 200, 300, 400 ou 500 kPa à 20°C et une pression partielle de C5K égale à 24,7 kPa à 20°C (c'est-à-dire correspondant la valeur de $P_{C5K}$ indiquée dans le tableau I ci-avant pour une température de -15°C), conduira aux valeurs de rigidité diélectrique normalisée indiquées dans le tableau III ci-après.

Tableau III

| Pression du mélange à 20°C | Pression partielle de C5K à 20°C | Pourcentage molaire de C5K dans le mélange | Rigidité diélectrique normalisée | |
|---|---|---|---|---|
| | | | Mélange C5K/$CO_2$ | Mélange C5K/air sec |
| 100 kPa | | 24,7% | 2,8 | 3,0 |
| 200 kPa | | 12,4% | 2,1 | 2,4 |
| 300 kPa | 24,7 kPa | 8,2% | 1,9 | 2,2 |
| 400 kPa | | 6,2% | 1,7 | 2,0 |
| 500 kPa | | 4,9% | 1,6 | 1,9 |

On peut également prévoir que, pour un appareil électrique dont la température minimale d'utilisation sera de -5°C, l'utilisation de mélanges C5K/$CO_2$ et C5K/air sec présentant une pression égale à 100, 200, 300, 400 ou 500 kPa à 20°C et une pression partielle de C5K égale à 36,7 kPa à 20°C (c'est-à-dire correspondant la valeur de $P_{C5K}$ indiquée dans le tableau I ci-avant pour une température de -5°C), conduira aux valeurs de rigidité diélectrique normalisée indiquées dans le tableau IV ci-après.

Tableau IV

| Pression du mélange à 20°C | Pression partielle de C5K à 20°C | Pourcentage molaire de C5K dans le mélange | Rigidité diélectrique normalisée | |
|---|---|---|---|---|
| | | | Mélange C5K/$CO_2$ | Mélange C5K/air sec |
| 100 kPa | | 36,7% | 3,2 | 3,8 |
| 200 kPa | | 18,4% | 2,4 | 2,7 |
| 300 kPa | 36,7 kPa | 12,2% | 2,1 | 2,4 |
| 400 kPa | | 9,2% | 1,9 | 2,2 |
| 500 kPa | | 7,3% | 1,8 | 2,1 |

**Exemple 1 : Application à la moyenne tension :**

On remplit d'un mélange de C5K et de $CO_2$ deux appareils de type GIS (« Gas Insulated Switchgear ») - ci-après appareils **1** et **2** - de 24 kV de tension assignée et qui sont destinés à être utilisés à une température minimale de -15°C.

L'appareil **1** a une structure strictement identique à celle que présente l'appareil qui est commercialisé sous la référence FBX 24 kV par Schneider Electric et qui est rempli, dans sa version commerciale actuelle, de $SF_6$ à une pression de 130 kPa.

L'appareil **2** diffère de l'appareil **1** en ce que ses dérivations ont été gainées, par une gaine thermorétractable permettant d'éviter les amorçages entre ces dernières et en ce qu'on lui a rajouté un répartiteur de champ électrique.

Les appareils **1** et **2** étant destinés à être utilisés à une température minimale de -15°C, leur remplissage par le mélange C5K/$CO_2$ est réalisé de sorte que :

- la pression totale du mélange C5K/$CO_2$ soit égale dans ces appareils à 130 kPa à 20°C ;
- la pression partielle de C5K soit égale dans ces appareils à 24,7 kPa à 20°C ;

ce qui donne un pourcentage molaire de C5K égal à 19%.

Pour réaliser ce remplissage, chaque appareil est tout d'abord placé dans un caisson étanche, puis on fait le vide (0 - 0,1 kPa) à la fois à l'intérieur de l'appareil et entre l'appareil et la paroi du caisson de sorte à éviter que les parois de l'appareil ne se déforment.

On commence par tapisser de C5K la paroi interne de la cuve de l'appareil en injectant dans cette cuve de 0,3 à 1 kPa et, mieux encore, de 0,3 à 0,5 kPa de CK5 pur en utilisant la sortie « gaz » d'un réservoir de C5K qui possède une sortie « gaz » et une sortie « liquide » et que l'on a préalablement légèrement chauffé pour accélérer le débit d'écoulement du C5K.

Puis, on poursuit le remplissage de la cuve au moyen d'un mélangeur de gaz muni de deux bulleurs, en maintenant le rapport entre les pressions à 20°C du C5K et du $CO_2$ à 19% pendant tout le remplissage grâce à l'utilisation d'un débitmètre massique de précision. Pendant cette opération, la C5K est placée dans les deux bulleurs qui sont traversés par le $CO_2$ sous pression afin d'atteindre la pleine saturation.

Les appareils **1** et **2** ainsi remplis sont ensuite soumis à des essais de tenue diélectrique :

- sous choc de foudre (onde de 1,2 - 50 $\mu$s) entre phase et terre ;

- sous choc de foudre (onde de 1,2 - 50 $\mu$s) sur la distance de fonctionnement ;

- à la fréquence industrielle (50 Hz - 1 min) entre phase et terre ; et

- à la fréquence industrielle (50 Hz - 1 min) sur la distance de fonctionnement.

Tous ces essais sont réalisés conformément à la norme CEI 62271-200, à température ambiante et à -15°C (les appareils **1** et **2** étant dans ce dernier cas placés dans une enceinte réfrigérée).

Les résultats de ces essais sont présentés dans le tableau V ci-après.

A titre de comparaison, sont également indiquées dans ce tableau les tenues diélectriques obtenues dans les mêmes conditions pour le FBX 24 kV tel que commercialisé.

Tableau V

| Type d'essai de tenue diélectrique | FBX 24 kV | Appareil 1 | Appareil 2 |
|---|---|---|---|
| Choc de foudre entre phase et terre | > 125 kVc | 118 kVc | > 125 kVc |
| Choc de foudre sur la distance de sectionnement | > 145 kVc | > 145 kVc | > 145 kVc |
| Fréquence industrielle entre phase et terre | > 50 kV | > 50 kV | > 50 kV |
| Fréquence industrielle sur la distance de sectionnement | > 60 kV | > 60 kV | > 60 kV |

Ce tableau montre qu'un appareil électrique moyenne tension, qui est rempli d'un mélange C5K/$CO_2$ dans un rapport molaire de 19/81, présente, dans la gamme de températures allant de -15°C à +50°C, des performances équivalentes, en termes de tenue diélectrique, à celles que présente le même appareil lorsqu'il est rempli de $SF_6$ à la même pression, sauf en ce qui concerne la tenue diélectrique sous choc de foudre entre phase et terre.

Toutefois, ils montrent également qu'il suffit d'apporter à cet appareil quelques modifications structurelles mineures telles qu'un gainage de ses dérivations et l'ajout d'un répartiteur de champ électrique pour qu'il présente également une tenue diélectrique au choc de foudre entre phase et terre équivalente à celle que présente le même appareil lorsqu'il est rempli de $SF_6$ à la même pression.

L'appareil **1** est également soumis à des essais d'échauffement que l'on réalise conformément à la norme CEI 62271-200.

Ces essais montrent que, lorsque cet appareil est traversé par un courant permanent de 630 A RMS, les échauffements maximum mesurés au niveau des contacts électriques (qui représentent les points les plus chauds) ne sont supérieurs que de 1% à ceux obtenus, dans les mêmes conditions, pour le FBX 24 kV tel que commercialisé, ce qui est tout à fait acceptable.

A titre de comparaison, un appareil de structure identique à celle que présente le FBX 24 kV mais qui est rempli de $CO_2$ pur présente, lui, des échauffements maximum qui sont supérieurs de 7,8% à ceux obtenus pour le FBX 24 kV tel que commercialisé.

L'appareil **1** est en outre soumis à des essais de coupure que l'on réalise conformément à la norme CEI 60265-1.

Ces essais montrent qu'il est possible de réaliser, avec cet appareil, plus de 100 coupures pour un courant de 400 ampères, sous une tension assignée de 24 kV et avec un facteur de puissance de 0,7.

Ces résultats étant moins bons que ceux obtenus avec le FBX 24 kV tel que commercialisé puisque ce dernier permet de réaliser plus de 100 coupures mais pour un courant de 630 ampères, sous une tension assignée de 24 kV et avec un facteur de puissance de 0,7, on renouvelle les essais de coupure sur l'appareil **1** après avoir placé une pièce (rondelle) en matériau gazogène au contact des contacts électriques fixes de l'interrupteur, en l'espèce du PTFE chargé en $CeF_3$ à 5% massique, dans la chambre de coupure de cet appareil.

Il est alors possible de réaliser avec cet appareil plus de 100 coupures pour un courant de 630 ampères, sous une tension assignée de 24 kV et avec un facteur de puissance de 0,7.

Il suffit donc, là également, d'apporter à l'appareil **1** une modification structurelle mineure telle que l'ajout d'un matériau gazogène du type polymère fluoré (par exemple, PFA, FEP ou PTFE) additionné d'une charge fluorée (par exemple, $CaF_2$, $CeF_3$, $CeF_4$ ou $MgF_2$) pour que cet appareil présente des performances équivalentes, en terme de coupure, à celles que présente le même appareil lorsqu'il est rempli de $SF_6$ à la même pression.

**Exemple 2 : Application à la haute tension :**

On remplit d'un mélange de C5K et d'air sec un appareil de type GIS - ci-après appareil **3 -** de 145 kV de tension assignée et qui est destiné à être utilisé à une température minimale de -30°C.

L'appareil **3** a une structure strictement identique à celle que présente l'appareil qui est commercialisé par Alstom Grid sous la référence B65 et qui est rempli, dans sa version commerciale actuelle, de $SF_6$.

L'appareil **3** étant destiné à être utilisé à une température minimale de -30°C, son remplissage par le mélange C5K/air sec est réalisé de sorte que :

- la pression totale du mélange C5K/air sec soit égale dans cet appareil à 500 kPa à 20°C ;

- la pression partielle de C5K soit égale dans cet appareil à 12,7 kPa à 20°C ;

ce qui donne un pourcentage molaire de C5K égal à 2,54%.

Le remplissage de l'appareil **3** par le mélange C5K/air sec est réalisé en suivant le même protocole que celui décrit dans l'exemple 1 à ceci près qu'on utilise de l'air sec à la place du $CO_2$ et que l'on utilise un rapport entre les pressions à 20°C du C5K et de l'air sec égal à 2,5%.

L'appareil **3** ainsi rempli est ensuite soumis à des essais de tenue diélectrique à température ambiante sous chocs de foudre (onde de 1,2 - 50 $\mu$s) à onde positive et à onde négative conformément à la norme CEI 62271-1.

Les résultats de ces essais sont présentés dans le tableau VI ci-après.

A titre de comparaison, sont également indiquées dans ce tableau les tenues diélectriques obtenues dans les mêmes conditions pour un appareil de structure également identique à celle du B65 mais que l'on a rempli d'air sec à une pression de 500 kPa.

Tableau VI

| Type d'essai de tenue diélectrique | Appareil rempli d'air sec | Appareil 3 |
|---|---|---|
| Choc de foudre à onde positive | 334 kV | 534 kV |
| Choc de foudre à onde négative | 369 kV | 552 kV |

Ce tableau montre qu'un appareil haute tension, qui est rempli d'un mélange C5K/air sec dans un rapport molaire de 19/81, présente des performances, en termes de tenue diélectrique, bien supérieures à celles que présente le même appareil lorsqu'il est rempli d'air sec à la même pression.

**Exemple 3 : Influence du choix du pourcentage molaire de C5K du mélange sur la tenue diélectrique de ce mélange**

On remplit d'un mélange de C5K et d'air sec une série d'appareils du même type que l'appareil **1** précédemment utilisé (température minimale d'utilisation : -15°C ; pression totale du mélange C5K/air sec : 130 kPa) en faisant varier, d'un appareil à l'autre, le pourcentage molaire de C5K dans le mélange de sorte que ce pourcentage molaire soit respectivement égal à 0%, 31,2%, 64%, 95%, 100% et 146,8% du pourcentage molaire M de C5K qui permet de garantir qu'à -15°C, la proportion de C5K dans la partie dudit mélange C5K/air sec qui se trouve à l'état gazeux est maximale.

Puis, on soumet ces appareils à des essais de tenue diélectrique en champ homogène, à température ambiante, et on compare les résultats obtenus avec ceux obtenus à la même température et pour le même type d'appareil lorsque celui-ci est rempli de $SF_6$ à une pression de 130 kPa.

Les résultats de ces essais sont présentés dans le tableau VII ci-après, dans lequel la tenue diélectrique obtenue avec le mélange C5K/air sec est exprimée sous la forme d'un pourcentage de la tenue diélectrique obtenue avec le $SF_6$.

Tableau VII

| Pression partielle de C5K à 20°C | Pourcentage molaire M | Pourcentage molaire de C5K dans le mélange | Tenue diélectrique (*versus* $SF_6$) |
|---|---|---|---|
| 0 kPa | 0% | 0% (soit 0% de M) | 54% |
| 7,8 kPa | 6% | 1,87% (soit 31,2% de M) | 64% |
| 16 kPa | 12,3% | 7,87% (soit 64% de M) | 81% |
| 23,75 kPa | 18,3% | 17,38% (soit 95% de M) | 96% |
| 25 kPa | 19,2% | 19,2% (soit 100% de M) | 98% |
| 36,7 kPa | 28,2% | 41,4% (soit 146,8% de M) | 102% |

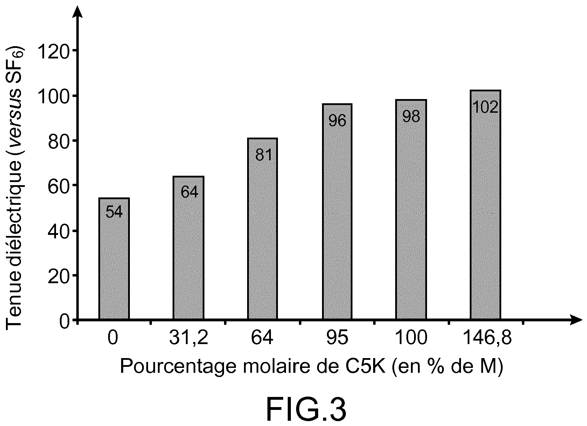

Les résultats de ces essais sont également illustrés, sous la forme d'un diagramme en barres, sur la figure 3 dans laquelle sont indiqués :

- en abscisse, le pourcentage molaire de C5K dans le mélange C5K/air sec, exprimé en pourcentage du pourcentage molaire M ; et

- en ordonnée, la tenue diélectrique obtenue avec le mélange C5K/air sec, exprimée en pourcentage de celle obtenue avec le SF$_6$.

Le tableau VII et la figure 3 confirment bien que, pour obtenir une tenue diélectrique au moins égale à 95% de celle obtenue avec du SF$_6$, il convient d'utiliser des mélanges de C5K et d'un gaz vecteur tel que l'air sec dans lesquels C5K est présente en un pourcentage molaire au moins égal à 95% du pourcentage molaire M de C5K qui permet de garantir qu'à la température minimale d'utilisation de l'appareil électrique, la proportion de C5K dans la partie dudit mélange C5K/air sec qui se trouve à l'état gazeux est maximale.

**REFERENCES CITEES**

**[1]** S. Nakauchi, D. Tosu, S. Matsuoka, A. Kumada et K. Hidaka, "Breakdown characteristics measurement of non-uniform field gap in SF6-N2, CF3I-N2 and CF3I-CO2 gas mixtures by using square pulse voltage", XVI International Conference on Gas Discharge and their Applications, Chine, 11-15 septembre 2006.
**[2]** EP-A-1 724 802.
**[3]** DE 20 2009 009 305 U1.

**Revendications**

1. Utilisation d'un mélange comprenant une fluorocétone et un gaz vecteur comme milieu d'isolation électrique et/ou d'extinction des arcs électriques dans un appareil électrique moyenne tension, la fluorocétone étant la décafluoro-2-méthylbutan-3-one et **caractérisé en ce qu'**elle est présente dans le mélange en un pourcentage molaire au moins égal à 95% du pourcentage molaire M déterminé par la formule (I) ci-après :

$$M = (P_{C5K}/P_{mélange}) \times 100 \quad (I)$$

dans laquelle :

- $P_{mélange}$ représente la pression, exprimée en kilopascals, du mélange à 20°C dans l'appareil électrique ; et
- $P_{C5K}$ représente la pression, exprimée en kilopascals, qui équivaut à 20°C à la pression de vapeur saturante que présente la décafluoro-2-méthylbutan-3-one à la température minimale d'utilisation de l'appareil électrique, $P_{C5K}$ étant déterminée par la formule (II) ci-après :

$$P_{C5K} = (PVS_{C5K} \times 293)/T_{minimale} \quad (II)$$

dans laquelle :

* $PVS_{C5K}$ représente la pression de vapeur saturante de la décafluoro-2-méthylbutan-3-one à la température minimale d'utilisation de l'appareil électrique, exprimée en kilopascals ; et
* $T_{minimale}$ représente la température minimale d'utilisation de l'appareil électrique, exprimée en Kelvins.

2. Utilisation selon la revendication 1, **caractérisée en ce que** la décafluoro-2-méthylbutan-3-one est présente dans le mélange en un pourcentage molaire qui est compris entre 95% et 130% du pourcentage molaire M.

3. Utilisation selon la revendication 2, **caractérisée en ce que** la décafluoro-2-méthylbutan-3-one est présente dans le mélange en un pourcentage molaire qui est compris entre 99% et 110% du pourcentage molaire M.

4. Utilisation selon la revendication 1, **caractérisée en ce que** la décafluoro-2-méthylbutan-3-one est présente dans le mélange en un pourcentage molaire qui est compris entre 95% et 100% du pourcentage molaire M.

5. Utilisation selon l'une quelconque des revendications précédentes, **caractérisée en ce que** le gaz vecteur est choisi parmi l'air, l'azote, le protoxyde d'azote, le dioxyde de carbone, les mélanges de dioxyde de carbone et d'oxygène dans un rapport volumique allant de 90/10 à 97/3, et les mélanges de ces gaz.

6. Appareil électrique moyenne tension, qui comprend une enceinte étanche dans laquelle se trouvent des composants électriques ainsi qu'un mélange comprenant une fluorocétone et un gaz vecteur pour l'isolation électrique et/ou l'extinction des arcs électriques susceptibles de se produire dans cet appareil, la fluorocétone étant la décafluoro-2-méthylbutan-3-one et **caractérisé en ce qu'**elle est présente dans le mélange en un pourcentage molaire au moins égal à 95% du pourcentage molaire M déterminé par la formule (I) ci-après :

$$M = (P_{C5K}/P_{mélange}) \text{ x } 100 \quad \text{(I)}$$

dans laquelle :

- $P_{mélange}$ représente la pression, exprimée en kilopascals, du mélange à 20°C dans l'appareil électrique ; et
- $P_{C5K}$ représente la pression, exprimée en kilopascals, qui équivaut à 20°C à la pression de vapeur saturante que présente la décafluoro-2-méthylbutan-3-one à la température minimale d'utilisation de l'appareil électrique, $P_{C5K}$ étant déterminée par la formule (II) ci-après :

$$P_{C5K} = (PVS_{C5K} \text{ x } 293)/T_{minimale} \quad \text{(II)}$$

dans laquelle :

\* $PVS_{C5K}$ représente la pression de vapeur saturante de la décafluoro-2-méthylbutan-3-one à la température minimale d'utilisation de l'appareil électrique, exprimée en kilopascals ; et
\* $T_{minimale}$ représente la température minimale d'utilisation de l'appareil électrique, exprimée en Kelvins.

7. Appareil selon la revendication 6, **caractérisé en ce que** la décafluoro-2-méthylbutan-3-one est présente dans le mélange en un pourcentage molaire qui est compris entre 95% et 130% du pourcentage molaire M.

8. Appareil selon la revendication 7, **caractérisé en ce que** la décafluoro-2-méthylbutan-3-one est présente dans le mélange en un pourcentage molaire qui est compris entre 99% et 110% du pourcentage molaire M.

9. Appareil selon la revendication 6, **caractérisé en ce que** la décafluoro-2-méthylbutan-3-one est présente dans le mélange en un pourcentage molaire qui est compris entre 95% et 100% du pourcentage molaire M.

10. Appareil selon l'une quelconque des revendications 6 à 9, **caractérisé en ce que** le gaz vecteur est choisi parmi l'air, l'azote, le protoxyde d'azote, le dioxyde de carbone, les mélanges de dioxyde de carbone et d'oxygène dans un rapport volumique allant de 90/10 à 97/3, et les mélanges de ceux-ci.

11. Appareil selon l'une quelconque des revendications 6 à 10, **caractérisé en ce qu'**il est un transformateur électrique à isolation gazeuse, une ligne à isolation gazeuse pour le transport ou la distribution de l'électricité ou un appareil électrique de connexion/déconnexion.

**Patentansprüche**

1. Verwendung eines Gemischs mit einem Fluorketon und einem Trägergas als Medium zur elektrischen Isolierung und/oder zur Löschung von Lichtbögen in einer elektrischen Mittelspannungseinrichtung, wobei das Fluorketon Decafluor-2-methylbutan-3-on ist und sich dadurch auszeichnet, dass es in dem Gemisch in einem Molprozentsatz von mindestens gleich 95% des Molprozentsatzes M vorliegt, der durch die nachstehende Formel (I) bestimmt ist:

$$M = (P_{C5K}/P_{Gemisch}) \text{ x } 100 \quad \text{(I)}$$

worin

- $P_{Gemisch}$ den Druck, ausgedrückt in Kilopascal, des Gemischs bei 20 °C in der elektrischen Einrichtung darstellt; und

- $P_{C5K}$ den Druck, ausgedrückt in Kilopascal, darstellt, der bei 20 °C dem Sättigungsdampfdruck entspricht, den das Decafluor-2-methylbutan-3-on bei der Mindesttemperatur der Verwendung der elektrischen Einrichtung aufweist, wobei $P_{C5K}$ durch die nachstehende Formel (II) bestimmt ist:

$$P_{C5K} = (PVS_{C5K} \times 293)/T_{min} \times 100 \ (II)$$

worin

\* $PVS_{C5K}$ den Sättigungsdampfdruck von Decafluor-2-methylbutan-3-on bei der Mindesttemperatur der Verwendung der elektrischen Einrichtung, ausgedrückt in Kilopascal, darstellt; und

\* $T_{min}$ die Mindesttemperatur der Verwendung der elektrischen Einrichtung, ausgedrückt in Kelvin, darstellt.

2. Verwendung nach Anspruch 1, **dadurch gekennzeichnet, dass** das Decaflu- or-2-methylbutan-3-on in dem Gemisch in einem Molprozentsatz vorliegt, der zwischen 95 % und 130 % des Molprozentsatzes M beträgt.

3. Verwendung nach Anspruch 2, **dadurch gekennzeichnet, dass** das Decaflu- or-2-methylbutan-3-on in dem Gemisch in einem Molprozentsatz vorliegt, der zwischen 99 % und 110 % des Molprozentsatzes M beträgt.

4. Verwendung nach Anspruch 1, **dadurch gekennzeichnet, dass** das Decaflu- or-2-methylbutan-3-on in dem Gemisch in einem Molprozentsatz vorliegt, der zwischen 95 % und 100 % des Molprozentsatzes M beträgt.

5. Verwendung nach einem der vorangehenden Ansprüche, **dadurch gekennzeichnet, dass** das Trägergas ausgewählt ist aus Luft, Stickstoff, Distickstoffoxid, Kohlendioxid, den Gemischen aus Kohlendioxid und Sauerstoff in einem Volumenverhältnis von 90:10 bis 97:3, und den Gemischen dieser Gase.

6. Elektrische Mittelspannungseinrichtung, die ein dichtes Gehäuse enthält, in welchem sich elektrische Bauteile sowie ein Gemisch mit einem Fluorketon und einem Trägergas als Medium zur elektrischen Isolierung und/oder zur Löschung von Lichtbögen, die in dieser Einrichtung auftreten können, befinden, wobei das Fluorketon Decafluor-2-methylbutan-3-on ist und sich dadurch auszeichnet, dass es in dem Gemisch in einem Molprozentsatz von mindestens gleich 95% des Molprozentsatzes M vorliegt, der durch die nachstehende Formel (I) bestimmt ist:

$$M = (P_{C5K}/P_{Gemisch}) \times 100 \quad (I)$$

worin

- $P_{Gemisch}$ den Druck, ausgedrückt in Kilopascal, des Gemischs bei 20 °C in der elektrischen Einrichtung darstellt; und

- $P_{C5K}$ den Druck, ausgedrückt in Kilopascal, darstellt, der bei 20 °C dem Sättigungsdampfdruck entspricht, den das Decafluor-2-methylbutan-3-on bei der Mindesttemperatur der Verwendung der elektrischen Einrichtung aufweist, wobei $P_{C5K}$ durch die nachstehende Formel (II) bestimmt ist:

$$P_{C5K} = (PVS_{C5K} \times 293)/T_{min} \times 100 \ (II)$$

worin

\* $PVS_{C5K}$ den Sättigungsdampfdruck von Decafluor-2-methylbutan-3-on bei der Mindesttemperatur der Verwendung der elektrischen Einrichtung, ausgedrückt in Kilopascal, darstellt; und

\* $T_{min}$ die Mindesttemperatur der Verwendung der elektrischen Einrichtung, ausgedrückt in Kelvin, darstellt.

7. Einrichtung nach Anspruch 6, **dadurch gekennzeichnet, dass** das Decaflu- or-2-methylbutan-3-on in dem Gemisch in einem Molprozentsatz vorliegt, der zwischen 95 % und 130 % des Molprozentsatzes M beträgt.

8. Einrichtung nach Anspruch 7, **dadurch gekennzeichnet, dass** das Decaflu- or-2-methylbutan-3-on in dem Gemisch in einem Molprozentsatz vorliegt, der zwischen 99 % und 110 % des Molprozentsatzes M beträgt.

9. Einrichtung nach Anspruch 6, **dadurch gekennzeichnet, dass** das Decaflu- or-2-methylbutan-3-on in dem Gemisch in einem Molprozentsatz vorliegt, der zwischen 95 % und 100 % des Molprozentsatzes M beträgt.

10. Einrichtung nach einem der Ansprüche 6 bis 9, **dadurch gekennzeichnet, dass** das Trägergas ausgewählt ist aus Luft, Stickstoff, Distickstoffoxid, Kohlendioxid, den Gemischen aus Kohlendioxid und Sauerstoff in einem Volumenverhältnis von 90:10 bis 97:3, und den Gemischen dieser Gase.

11. Einrichtung nach einem der Ansprüche 6 bis 10, **dadurch gekennzeichnet, dass** es sich dabei um einen gasisolierten elektrischem Transformator, um eine gasisolierte Leitung für den Transport bzw. die Verteilung von Elektrizität oder um eine elektrische Verbindungs-/Trenneinrichtung handelt.

**Claims**

1. Use of a mixture comprising a fluoroketone and a carrier gas as an electrical insulation medium and/or medium for extinction of electric arcs in a medium-voltage electrical device, the fluoroketone being decafluoro-2-methylbutan-3-one and **characterized in that** it is present in the mixture in a molar percentage at least equal to 95% of molar percentage M determined by the following formula (I):

$$M = (P_{C5K}/P_{mixture}) \times 100 \quad (I)$$

where:

- $P_{mixture}$ represents the pressure, expressed in kilopascals, of the mixture at 20°C in the electrical device; and
- $P_{C5K}$ represents the pressure, expressed in kilopascals, which is equivalent at 20°C to the saturation vapour pressure which decafluoro-2-methylbutan-3-one has at the minimum service temperature of the electrical device, where $P_{C5K}$ is determined by the formula (II) below:

$$P_{C5K} = (PVS_{C5K} \times 293)/T_{minimum} \quad (II)$$

where:

* $PVS_{C5K}$ represents the saturation vapour pressure of decafluoro-2-methylbutan-3-one at the minimum service temperature of the electrical device, expressed in kilopascals; and
* $T_{minimum}$ represents the minimum service temperature of the electrical device, expressed in Kelvin.

2. Use according to claim 1, **characterised in that** the decafluoro-2-methylbutan-3-one is present in the mixture in a molar percentage which is between 95% and 130% of molar percentage M.

3. Use according to claim 2, **characterised in that** the decafluoro-2-methylbutan-3-one is present in the mixture in a molar percentage which is between 99% and 110% of molar percentage M.

4. Use according to claim 1, **characterised in that** the decafluoro-2-methylbutan-3-one is present in the mixture in a molar percentage which is between 95% and 100% of molar percentage M.

5. Use according to any one of the previous claims, **characterised in that** the carrier gas is chosen from among air, nitrogen, nitrous oxide, carbon dioxide, mixtures of carbon dioxide and oxygen in a volume ratio of between 90/10 and 97/3, and the mixtures of these gases.

6. A medium-voltage electrical device, which comprises a sealed enclosure containing electrical components and a mixture comprising a fluoroketone and a carrier gas for electrical insulation and/or extinction of the electric arcs which may be produced within this device, the fluoroketone being decafluoro-2-methylbutan-3-one and **character-**

**ized in that** it is present in the mixture in a molar percentage at least equal to 95% of molar percentage M determined by the following formula (I):

$$M = (P_{C5K}/P_{mixture}) \times 100 \quad (I)$$

where:

- $P_{mixture}$ represents the pressure, expressed in kilopascals, of the mixture at 20°C in the electrical device; and
- $P_{C5K}$ represents the pressure, expressed in kilopascals, which is equivalent at 20°C to the saturation vapour pressure which decafluoro-2-methylbutan-3-one has at the minimum service temperature of the electrical device, where $P_{C5K}$ is determined by the formula (II) below:

$$P_{C5K} = (PVS_{C5K} \times 293)/T_{minimum} \quad (II)$$

where:

* $PVS_{C5K}$ represents the saturation vapour pressure of decafluoro-2-methylbutan-3-one at the minimum service temperature of the electrical device, expressed in kilopascals; and
* $T_{minimum}$ represents the minimum service temperature of the electrical device, expressed in Kelvin.

7. A device according to claim 6, **characterised in that** the decafluoro-2-methylbutan-3-one is present in the mixture in a molar percentage which is between 95% and 130% of molar percentage M.

8. A device according to claim 7, **characterised in that** the decafluoro-2-methylbutan-3-one is present in the mixture in a molar percentage which is between 99% and 110% of molar percentage M.

9. A device according to claim 6, **characterised in that** the decafluoro-2-methylbutan-3-one is present in the mixture in a molar percentage which is between 95% and 100% of molar percentage M.

10. A device according to any one of claims 6 to 9, **characterised in that** the carrier gas is chosen from among air, nitrogen, nitrous oxide, carbon dioxide, mixtures of carbon dioxide and oxygen in a volume ratio of between 90/10 and 97/3, and the mixtures of these gases.

11. A device according to any one of claims 6 to 10, **characterised in that** it is a gas-insulated transformer, a gas-insulated line for transporting or distributing of electricity, or an electrical connection/disconnection device.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202009009305 U1

- EP 1724802 A

**Littérature non-brevet citée dans la description**

- *Protocole de Kyoto,* 1997
- **NAKAUCHI et al.** *XVI International Conference on Gas Discharge and their Applications,* 11 Septembre 2006

- **S. NAKAUCHI ; D. TOSU ; S. MATSUOKA ; A. KUMADA ; K. HIDAKA.** Breakdown characteristics measurement of non-uniform field gap in SF6-N2, CF3I-N2 and CF3I-CO2 gas mixtures by using square pulse voltage. *XVI International Conference on Gas Discharge and their Applications,* 11 Septembre 2006